# EUROPÄISCHE PATENTANMELDUNG

(11) **EP 0 908 127 A1**
(43) Veröffentlichungstag der Anmeldung: **14.04.1999**
(21) Anmeldenummer: 98118804.8
(22) Anmeldetag: 05.10.1998
(51) Int. Cl.: A47J 9/00

(54) **Butterdose**

(30) Priorität: 09.10.1997 DE 19744567; 08.11.1997 DE 19749473
(71) Anmelder: Cetoni Umweltechnologie-entwicklungsgesellschaft mbH, 94034 Passau (DE)
(72) Erfinder: Schlattl, Alice, 94161 Ruderting (DE); Dichtl, Bettina, 94161 ruderting (DE)
(74) Vertreter: Graf, Helmut, Dipl.-Ing.

(57) **Zusammenfassung**

Eine Butterdose (1) besteht aus einer Grund-Platte (2) und aus einem abnehmbaren, einen Innenraum zur Aufnahme eines Butterstücks begrenzenden Deckel (3), wobei die Grundplatte eine Ablagefläche (7) für das Butterstück bildet und bei Ausbildung als Butterspender der Deckel (3) an wenigstens einer Seite (14) am Deckelrand mit einer Schneide (13) versehen ist.

## Beschreibung

Die Erfindung bezieht sich auf eine Butterdose. Aufgabe der Erfindung ist es, eine Butterdose aufzuzeigen, die auch eine einfache Portionierung von Butter möglich ist.

Zur Lösung dieser Aufgabe ist eine Butterdose entsprechend dem Patentanspruch 1 ausgebildet.

Bei der erfindungsgemäßen Butterdose ist der Deckel zumindest an einem Randbereich mit einer Schneide versehen, so daß durch Abheben bzw. Wegschwenken des Deckels von der die Auflagefläche für das Butterstück bildenden Grundplatte und durch anschließendes Absenken bzw. Zurückschwenken des Deckels auf die Grundplatte ein portioniertes Abchneiden von Butterscheiben möglich ist.

Die Schneide bzw. das Messer kann einstückig mit dem Deckel hergestellt oder aber mit diesem fest oder auswechselbar verbunden sein. Als Material für die Butterdose eignet sich z.B. Kunststoff, aber auch Metall, vorzugsweise Edelstahl.

Mit der Erfindung ist ein hauchdünnes 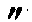 Abportionieren" von Butterstreifen möglich. Der erfindungsgemäße Butterspender ist funktionstüchtig sowohl bei harter und weicher Butter. Sofern eine auswechselbare Schneide oder ein auswechselbares Messer verwendet wird, kann im Deckel eine Aufnahme zur Unterbringung eines Ersatzmessers vorgesehen sein.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1 - 3: einen als Butter-Dose ausgebildeten Butter-Spender gemäß der Erfindung in Draufsicht, in Seitenansicht sowie in einer Stirnansicht;
- Fig. 4: einen Längsschnitt durch den Butter-Spender der Figuren 1 - 3;
- Fig. 5: einen Querschnitt durch den Spender;
- Fig. 6: eine Draufsicht auf die Grundplatte des Spenders, mit angedeutetem Deckel;
- Fig. 7 und 8: das herausnehmbare Tablett des verschiebbaren Teils der Grundplatte in Unteransicht und in Draufsicht;
- Fig. 9 und 10: in Draufsicht (bei abgenommenem Deckel) und in Seitenansicht eine weitere Ausführungsform des erfindungsgemäßen Butterspenders.

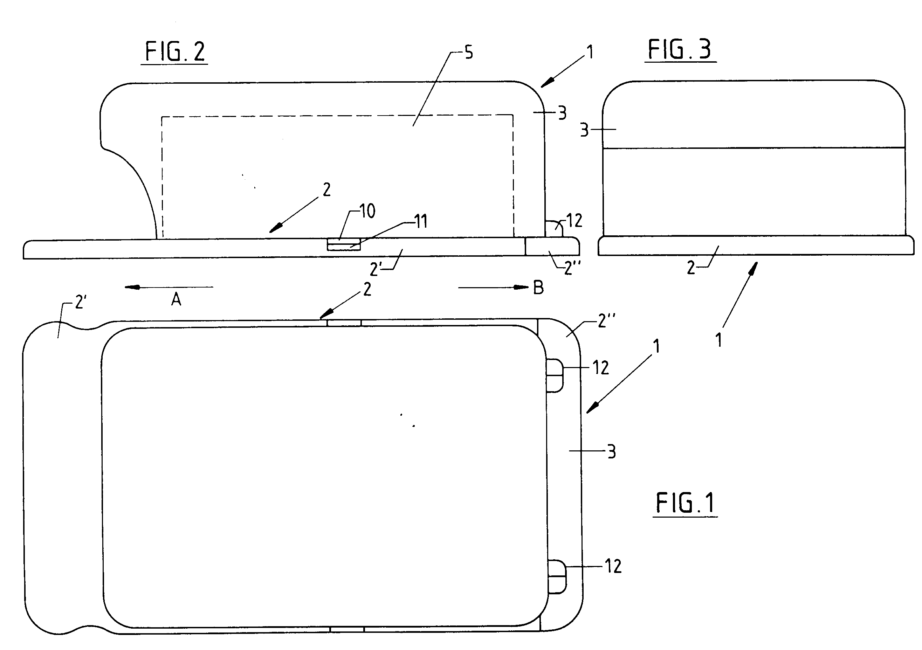

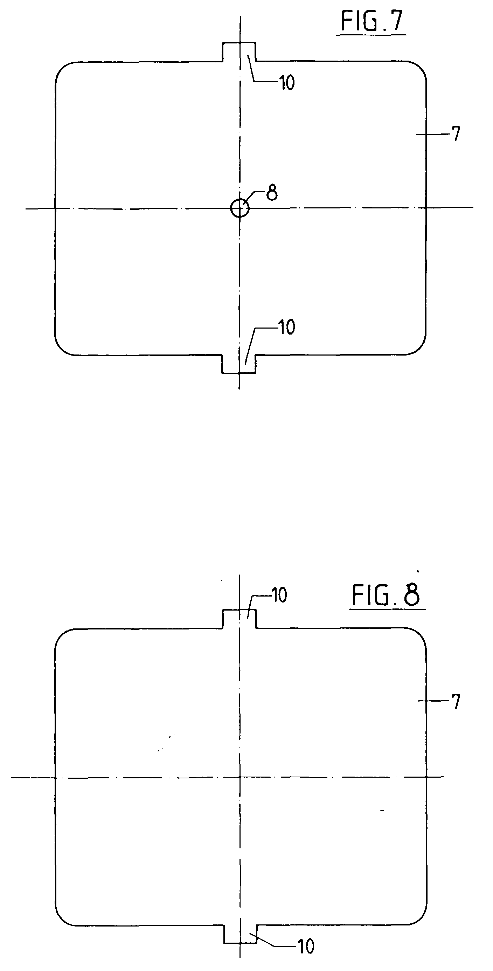

Der in den Figuren 1 - 8 dargestellte und allgemein mit 1 bezeichnete Butterspender ist nach Art einer Butterdose ausgebildet und besteht aus einer unteren Platte 2 und aus einem haubenartigen Deckel 3, der im geschlossenem Zustand mit seiner offenen Unterseite auf der Platte 2 aufliegt. Der auf der Platte 2 und im Deckel 3 gebildete Innenraum 4 dient zur Aufnahme eines Butterstückes 5 mit den genormten Abmessungen.

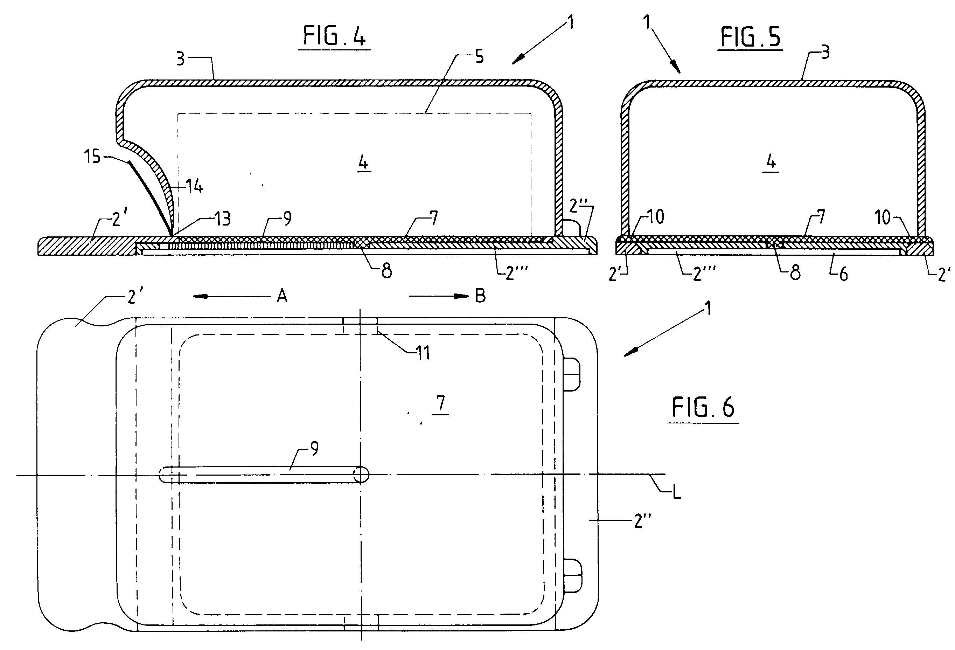

Die Platte 2 ist mehrteilig ausgebildet, d.h. sie besteht zunächst aus den beiden Plattenteilen 2' und 2'', die in Längsrichtung L der im wesentlichen rechteckförmigen Platte 2 und damit auch in Längsrichtung des Butterspenders 1 relativ zueinander verschiebbar sind, und zwar um ein Maß, welches wenigstens gleich, bevorzugt aber größer ist als die halbe Abmessung, die der Innenraum 4 in Richtung der Längsachse L aufweist. Das Plattenteil 2' bildet die Vorderseite des Spenders 1 und das Plattenteil 2'' der Rückseite. Die relative Verschiebbarkeit der beiden Plattenteile 2' und 2'' zueinander ist durch die Pfeile A und B angedeutet. Wie insbesondere die Figur 5 zeigt, ist das rückwärtige Plattenteil 2'' mit einem angeformten Abschnitt 2''' dadurch im Plattenteil 2' geführt, daß es mit einem dortigen mehrfach-schwalbenschanzartigen Querschnitt Flächen einer Ausnehmung 6 im Plattenteil 1' hintergreift. Am Plattenteil 2' ist ein plattenförmiges Tablett 7 vorgesehen, welches in eine Öffnung des Plattenteils 2' eingesetzt ist, und zwar derart, daß nach dem Einsetzen die Oberseite des Tabletts 7 bündig mit der Oberseite der beiden Plattenteile 2' und 2'' liegt. Der in der Ausnehmung 6 geführte Abschnitt 2''' des rückwärtigen Plattenteils 2'' liegt gegen die Unterseite des Tabletts 7 an. Dort ist ein zapfenartiger Vorsprung 8 angeformt, der in ein Langloch 9 eingreift, welches mit seiner Achse achsgleich mit der Längsachse L liegt und in dem in der Ausnehmung 6 eingreifenden Abschnitt des Plattenteiles 2'' vorgesehen ist. Mit zwei seitlichen Vorsprüngen 10 greift das Tablett 7 in Ausnehmungen 11 ein, die an der Oberseite des Plattenteiles 2' vorgesehen sind. Hierdurch ist das Tablett 7 formschlüssig an dem Plattenteil 2' gehalten. Durch den in das Langloch 9 eingreifenden Vorsprung 8 ist weiterhin auch der maximale Weg der Relativbewegung zwischen den Plattenteilen 2' und 2'' begrenzt. Die Länge des Langloches 9 ist mindestens gleich oder größer als die halbe Abmessung des Innenraumes 4 in Richtung der Längsachse L. Bei der dargestellten Ausführungsform besitzt das im wesentliche rechteckförmige Tablett 7 eine Breite, die gleich der gesamten Breite des Innenraumes 4 senkrecht zur Längsachse L und parallel zur Ebene der Platte 2 ist. Die Länge des Tabletts 7 ist wiederum in etwa gleich der Abmessung des Innenraumes 4 in Richtung der Längsachse L.

Der Deckel 3 ist an seiner Rückseite an dem Plattenteil 2' um eine Achse senkrecht zur Langsachse L und parallel zu den Ebenen der Platte 2 schwenkbar vorgesehen, und zwar mit Hilfe von Gelenken 12, die aber auch ein Lösen des Deckels 3 von der Platte 2 ermöglichen, und zwar beispielsweise bei vollständig von der Platte 2 weggeklappten Deckel 3, um so insbesondere auch ein Säubern des Butterspenders 1 zu erleichtern.

An der den Gelenken 12 gegenüberliegenden Vorderseite ist der Deckel 2 mit einer sich über die gesamte Vorderseite bzw. Breite des Deckels 3 erstreckenden Schneide 13 versehen. Diese Schneide 13 befindet sich an einem Wandabschnitt 14 des Deckels 3 bzw. der Vorderseite dieses Deckels, der in bestimmter Weise derart geformt ist, daß bei Abschneiden einer Butterscheibe 15 von dem Butterstück 5 sich diese Scheibe in der in der Figur 4 wiedergegebenen Weise rollt und damit nicht an der Außenfläche des Deckels 3 bzw. des Wandabschnittes 14 haften bleibt. Bei der dargestellten Ausführungsform ist der Wandabschnitt 14 hierfür an seiner Außenfläche konkav gewölbt, und zwar um eine gedachte Achse, die senkrecht zur Längsachse L und parallel zu den Ebenen der Platte 2 liegt. Durch den gewölbten Wandabschnitt 14 ist der Rand des Deckels 3 an der Vorderseite in der in der Figur 4 wiedergegebenen Weise nach innen gezogen.

Der Butterspender 1 wird so verwendet, daß bei zusammengeschobenen Plattenteilen 2' und 2'' und im Plattenteil 2' angeordnetem Tablett 7 das Butterstück 5 auf die Oberseite des Tablettes 7 aufgelegt wird. Durch Schließen des Deckels 3 kann dann die Butter an einem geeigneten Ort, beispielsweise in der üblichen Weise aufbewahrt werden.

Soll eine bestimmte Menge an Butter abgegeben werden, so wird hierfür bei aufgeklappten Deckel 3 das Plattenteil 2' um einen bestimmten Betrag relativ zum Plattenteil 2'' nach vorne bewegt (Pfeil A), so daß das Butterstück 5 mit seinem dem Wandabschnitt 14 benachbarten Randbereich unter der Schneide 13 zu liegen kommt. Durch Schließen des Deckels 3 (Schwenken um die Achsen der Gelenke 12) wird dann die Butterscheibe 15 von dem Butterstück 5 mit der Schneide 13 abgeschnitten.

Nach dem Abschneiden wird das vordere Plattenteil 2' wiederum in die Ausgangsstellung zurückbewegt (Pfeil B), so daß der Butterspender 1 zum Aufbewahren wiederum kleine Abmessungen aufweist.

Der maximale Bewegungshub des Plattenteiles 2' relativ zum Plattenteil 2'' ist etwas größer als die halbe Abmessung des Butterstückes 5 in Richtung der Längsachse L. Durch die Beschränkung des Bewegungshubes auf diese Größe wird eine stabile Ausbildung des Butterspenders 1 erreicht. Um jeweils auch die andere Hälfte des Butterstückes 5 in der vorbeschriebenen Weise in Scheiben 15 portionieren zu können, wird das Tablett 7 gedreht.

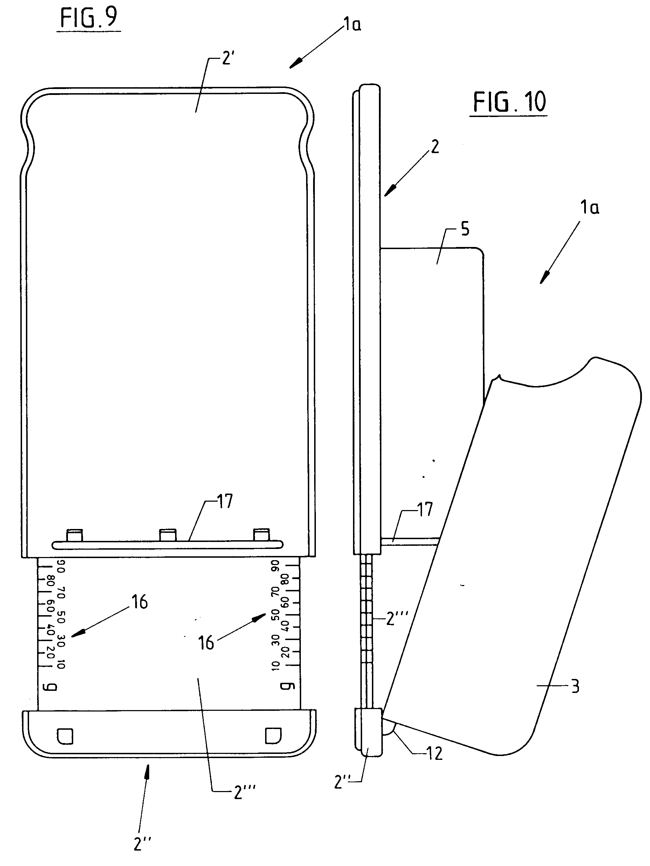

Die Figur 9 und 10 zeigen als weitere mögliche Ausführungsform einen Butterspender 1a, der sich vom Butterspender 1 im wesentlichen nur dadurch unterscheidet, daß an der Oberseite des Abschnitte 2''' des Plattenteils 2'' eine Skala 15 vorgesehen ist, die mit der rückwärtigen Kante des Plattenteils 2' zusammenwirkt und die Menge bzw. Masse des jeweils abgeschnittenen Butterstücks oder der abgeschnittenen Butterscheibe 15 angibt.

Weiterhin ist an der Oberseite des Plattenteils 2' bzw. an der dort gebildeten Ablage für das Butterstück 5 ein Anschlag 17 vorgesehen, der eine genaue Positionierung des Butterstücks 5 ermöglicht.

Die Erfindung wurde vorstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Butterspender
- 2: Platte
- 2', 2'': Plattenteil
- 2''': Abschnitt
- 3: Deckel
- 4: Innenraum
- 5: Butterstück
- 6: Ausnehmung
- 7: Tablett
- 8: Vorsprung
- 9: Langloch
- 10: Vorsprung
- 11: Ausnehmung
- 12: Gelenk
- 13: Schneide
- 14: Wandabschnitt
- 15: Butterscheibe
- 16: Skala
- 17: Anschlag

## Patentansprüche

1. Butterdose bestehend aus einer Grund-Platte (2) und aus einem abnehmbaren, einen Innenraum zur Aufnahme eines Butterstücks (5) begrenzenden Deckel (3), wobei die Grundplatte eine Ablagefläche (7) für das Butterstücks (5) bildet, **dadurch gekennzeichnet**, daß bei Ausbildung als Butterspender der Deckel (3) an wenigstens einer Seite am Deckelrand mit einer Schneide (13) versehen ist.

2. Butterdose nach Anspruch 1, dadurch gekennzeichnet, daß die Schneide (13) an einer Schmalseite des Deckel randes vorgesehen ist.

3. Butterdose nach Anspruch 1 oder 2, dadurch gekennzeichnet, daß die Schneide (13) einstückig mit dem Deckel (3) hergestellt ist oder am Deckel (3) als eigenständiges Element, beispielsweise auswechselbar befestigt ist.

4. Butterdose nach einem der vorhergehenden Ansprüche, gekennzeichnet durch Mittel (12), die ein Schwenken des Deckels (3) relativ zur Platte (2) um eine definierte Achse ermöglichen, wobei die Mittel vorzugsweise von wenigstens einem Gelenk (12) gebildet sind.

5. Butterdose nach einem der vorhergehenden Ansprüche, dadurch gekennzeichnet, daß die Auflagefläche (7) für das Butterstück (5) relativ zu den Mitteln (12) beweglich ist.

6. Butterdose nach einem der vorhergehenden Ansprüche, dadurch gekennzeichnet, daß die Auflagefläche (7) für das Butterstück (5) von einem entnehmbaren, vorzugsweise auch drehbaren Tablett (7) gebildet ist.

7. Butterdose nach einem der vorhergehenden Ansprüche, dadurch gekennzeichnet, daß die Platte (2) aus zwei in einer Achsrichtung (L), vorzugsweise in Richtung der Längsachse (L) der vorzugsweise rechteckförmig ausgebildeten Platte (2) relativ zueinander verschiebbaren Plattenteilen (2', 2'') besteht, von denen ein Plattenteil (2') die Ablagefläche für das Butterstück (5) bildet oder aufweist und das andere Plattenteil (2'') die Mittel für das Schwenken des Deckels (3) besitzt.

8. Butterdose nach einem der vorhergehenden Ansprüche, dadurch gekennzeichnet, daß der Deckel (3) bzw. dessen Rand an die Schneide (13) anschließend einen gekrümmten Wandabschnitt (14) besitzt.

9. Butterdose nach einem der vorhergehenden Ansprüche, gekennzeichnet durch ihre Herstellung zumindest teilweise aus Kunststoff und/oder Metall.

10. Butterdose nach einem der vorhergehenden Ansprüche, gekennzeichnet durch eine Skala (16) zum Einstellen bzw. Ablesen der jeweiligen, abgetrennten Buttermenge.
